# EUROPEAN PATENT APPLICATION

(11) **EP 4 636 880 A1**
(43) Date of publication of application: **22.10.2025**
(21) Application number: 25166903.2
(22) Date of filing: 28.03.2025
(51) Int. Cl.: H01M 10/04, H01M 10/0525, H01M 10/0583, H01M 50/105, H01M 50/184, H01M 50/54, H01M 50/55, H01M 50/557

(54) **SECONDARY BATTERY**

(30) Priority: 19.04.2024 KR 20240052569
(71) Applicant: SAMSUNG SDI CO., LTD., Yongin-si, Gyeonggi-do 17084 (KR)
(72) Inventor: MOON, EUN JEONG, 17084 Yongin-si, Gyeonggi-do (KR); KIM, DONG HYUN, 17084 Yongin-si, Gyeonggi-do (KR)
(74) Representative: Gulde & Partner

(57) **Abstract**

A secondary battery (1) includes: an electrode assembly (10) comprising a first electrode plate (20), a second electrode plate (30), and a separator (40), the electrode assembly (10) being formed such that a first uncoated portion (22) connected to the first electrode plate (20) is located on one side of the electrode assembly (10) in a width direction and a second uncoated portion (32) connected to the second electrode plate (30) is on an opposite side of the electrode assembly (10) in the width direction; a pouch unit (50) accommodating the electrode assembly (10); a first electrode terminal (60) electrically connected to the first uncoated portion (22) and located on one side of the pouch unit (50) in the width direction; and a second electrode terminal (70) electrically connected to the second uncoated portion (32) and located on an opposite side of the pouch unit (50) in the width direction.

## Description

### BACKGROUND

### 1. Field

Aspects of some embodiments of the present disclosure relate to a secondary battery.

### 2. Description of the Related Art

Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. The secondary battery includes an electrode assembly consisting of a positive electrode and a negative electrode, a case accommodating the same, and electrode terminals connected to the electrode assembly.

The above information disclosed in this Background section is only for enhancement of understanding of the background of the invention and therefore it may contain information that does not constitute prior art.

### SUMMARY

Aspects of some embodiments of the present disclosure include a high-output secondary battery in which integrated electrode uncoated portions are located on both sides of an electrode assembly in a width direction, thereby relatively shortening a path along which current moves and thus relatively reducing resistance.

However, the technical problems to be achieved in the embodiments of the disclosure are not limited to the technical problems mentioned above, and other technical problems not mentioned herein will be clearly understood from the following description by those skilled in the art to which the disclosure belongs.

According to some embodiments of the present disclosure, a secondary battery includes an electrode assembly including a first electrode plate, a second electrode plate, and a separator, the electrode assembly being formed such that a first uncoated portion connected to the first electrode plate is located on one side of the electrode assembly in a width direction and a second uncoated portion connected to the second electrode plate is located on the other side of the electrode assembly in a width direction, a pouch unit configured to accommodate the electrode assembly, a first electrode terminal electrically connected to the first uncoated portion and located on one side of the pouch unit in a width direction, and a second electrode terminal electrically connected to the second uncoated portion and located on the other side of the pouch unit in the width direction.

According to some embodiments, the electrode assembly may be formed such that the separator is bent in a zigzag direction, and the first electrode plate and the second electrode plate may be alternately stacked with the separator interposed therebetween.

According to some embodiments, the length of the first uncoated portion in a longitudinal direction may be equal to or less than the length of the first electrode plate in a longitudinal direction.

According to some embodiments, the first electrode terminal may include a first electrode body extending along the first uncoated portion in the longitudinal direction of the electrode assembly, electrically connected to the first uncoated portion, and located on one side of the electrode assembly in a width direction, and may include a first extension member extending from the first electrode body to the outside of the pouch unit.

According to some embodiments, the length of the second uncoated portion in a longitudinal direction may be equal to or less than the length of the second electrode plate in a longitudinal direction.

According to some embodiments, the second electrode terminal may include a second electrode body extending along the second uncoated portion in the longitudinal direction of the electrode assembly, electrically connected to the second uncoated portion, and located on the other side of the electrode assembly in a width direction, and may include a second extension member extending from the second electrode body to the outside of the pouch unit.

According to some embodiments, the secondary battery may further include a sealing portion configured to seal an outer periphery of the electrode assembly after the electrode assembly to which the first electrode terminal and the second electrode terminal are connected is accommodated in the pouch unit.

According to some embodiments, after the sealing portion located on one side of the pouch unit in a width direction is folded toward the first electrode terminal, the sealing portion and the first electrode terminal may be folded together toward the pouch unit.

According to some embodiments, after the sealing portion located on the other side of the pouch unit in a width direction is folded toward the second electrode terminal, the sealing portion and the second electrode terminal may be folded together toward the pouch unit.

According to some embodiments of the present disclosure, a secondary battery includes an electrode assembly formed such that a first electrode plate and a second electrode plate are alternately stacked with a separator interposed therebetween, a first uncoated portion connected to the first electrode plate is located on one side of the electrode assembly in a width direction, and a second uncoated portion connected to the second electrode plate is located on the other side of the electrode assembly in a width direction, a pouch unit configured to accommodate the electrode assembly, a first electrode terminal electrically connected to the first uncoated portion and located on one side of the pouch unit in a width direction, and a second electrode terminal electrically connected to the second uncoated portion and located on the other side of the pouch unit in the width direction, wherein the first electrode terminal and the second electrode terminal extend in the longitudinal direction of the electrode assembly and are mounted parallel to each other.

According to some embodiments, the separator may be bent in a Z shape and may include a plurality of bent areas in contact with an end portion of the other side of the first electrode plate in a width direction and an end portion of one side of the second electrode plate in a width direction.

According to some embodiments, the secondary battery may further include a sealing portion configured to seal an outer periphery of the electrode assembly after the electrode assembly to which the first electrode terminal and the second electrode terminal are connected is accommodated in the pouch unit.

According to some embodiments, after the sealing portion located on one side of the pouch unit in a width direction is folded toward the first electrode terminal, the sealing portion and the first electrode terminal may be folded together toward the pouch unit.

According to some embodiments, after the sealing portion located on the other side of the pouch unit in a width direction is folded toward the second electrode terminal, the sealing portion and the second electrode terminal may be folded together toward the pouch unit.

According to some embodiments, the pouch unit may include a pouch body surrounding an outer side of the electrode assembly, and may include a pouch wing connected to each of both sides of the pouch body in a width direction and surrounding each of the first electrode terminal and the second electrode terminal.

According to some embodiments, the pouch wing may be folded toward the pouch body with an adhesive applied to an outer side of the pouch wing and may be fixed to the pouch body.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to this specification illustrate aspects of some embodiments of the present disclosure, and serve to further understand the technical idea of the present disclosure together with the detailed description of the present disclosure, and thus, the present disclosure should not be construed as being limited to the matters described in such drawings.
FIG. 1 is a plan view showing a secondary battery according to some embodiments of the present disclosure;
FIG. 2 is a side view showing the secondary battery according to some embodiments of the present disclosure;
FIG. 3 is a plan view showing an electrode assembly according to some embodiments of the present disclosure;
FIG. 4 is a front view of the electrode assembly according to some embodiments of the present disclosure;
FIG. 5 is a front view showing a state in which an outer electrode plate is mounted on the electrode assembly according to some embodiments of the present disclosure;
FIG. 6 is a plan view showing a state in which a first electrode terminal and a second electrode terminal are mounted to the electrode assembly according to some embodiments of the present disclosure;
FIG. 7 is a plan view showing a state in which the electrode assembly is mounted in a pouch unit according to some embodiments of the present disclosure;
FIG. 8 is a plan view showing a state in which the pouch unit is separated from a gas bag according to some embodiments of the present disclosure;
FIG. 9 is a front cross-sectional view of the secondary battery according to some embodiments of the present disclosure;
FIG. 10 is a plan view showing a state in which a sealing portion of the secondary battery is folded above a pouch wing according to some embodiments of the present disclosure;
FIG. 11 is a front cross-sectional view showing a state in which the sealing portion of the secondary battery is folded above the pouch wing according to some embodiments of the present disclosure;
FIG. 12 is a front cross-sectional view showing a state in which the second electrode terminal is folded toward a pouch body together with the sealing portion according to some embodiments of the present disclosure;
FIG. 13 is a front cross-sectional view of the secondary battery according to some embodiments of the present disclosure;
FIG. 14 is a perspective view showing a state in which both sides of the secondary battery pass through a roller processing device according to some embodiments of the present disclosure;
FIG. 15 is a front view showing a state in which the pouch wing and the sealing portion are located between a first upper roller and a first lower roller according to some embodiments of the present disclosure;
FIG. 16 is a front view showing a state in which the sealing portion is bent by a second lower roller according to some embodiments of the present disclosure;
FIG. 17 is a front view showing a state in which the sealing portion and the pouch wing form a right angle therebetween according to some embodiments of the present disclosure;
FIG. 18 is a front view showing a state in which the sealing portion and the pouch wing form an acute angle therebetween according to some embodiments of the present disclosure;
FIG. 19 is a front view showing a state in which the sealing portion and the pouch wing face each other according to some embodiments of the present disclosure;
FIG. 20 is a front view showing a state in which the sealing portion and the upper side of the pouch wing overlap each other according to some embodiments of the present disclosure;
FIG. 21 is a front view showing a state in which an adhesive is applied to the sealing portion according to some embodiments of the present disclosure;
FIG. 22 is a front view showing a state in which the sealing portion and the pouch wing are bent toward the pouch body according to some embodiments of the present disclosure;
FIG. 23 is a front view showing a state in which the sealing portion is fixed to the side surface of the pouch body according to some embodiments of the present disclosure;
FIGs. 24A and 24B are perspective views showing a battery pack including the secondary battery according to some embodiments of the present disclosure; and
FIGs. 25A and 25B are, respectively, a perspective view and a side view showing a vehicle including the battery pack according to some embodiments of the present disclosure.

### DETAILED DESCRIPTION

Hereinafter, aspects of some embodiments of the present disclosure will be described in more detail. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe the disclosure in the best way possible. Therefore, the embodiments described in the specification and the configurations described in the drawings are only example embodiments of the present disclosure, and do not represent all of the technical ideas of the present disclosure. It is to be understood that there may be various equivalents and variations in place of them at the time of filing the present application. In addition, as used herein, the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. In addition, when describing embodiments of the present disclosure, "can" and "may" may include "one or more embodiments of the present disclosure."

In addition, for a better understanding of the invention, The attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, unless otherwise defined, a first element, component, region, layer or section described below could be termed a second element, component, region, layer or section, without departing from the scope of the present disclosure.

Throughout the specification, each component may be singular or plural, unless the context clearly indicates otherwise.

The arrangement of an arbitrary component on the "upper portion (or lower portion)" or "upper (or lower) portion" of a component means that an arbitrary component is placed in contact with the upper (or lower) surface of the component. In addition, it may mean that other components may be interposed between the component and any component located on (or under) the component.

Also, it will be understood that when an element is referred to as being "connected to," "coupled to," or "linked to" another element, these elements can be directly connected or coupled to each other, another intervening element may be present therebetween, or the respective elements may be connected, coupled, or linked to each other through another elements.

Throughout the specification, the expression "A and/or B" means A, B, or A and B, unless otherwise defined. That is, as used herein, the term "and/or" includes any and all combinations of one or more of the associated listed items. The expression "C to D" means C or more and D or less, unless otherwise defined.

As used herein, the terms are for describing embodiments of the present disclosure and are not intended to limit the disclosure.

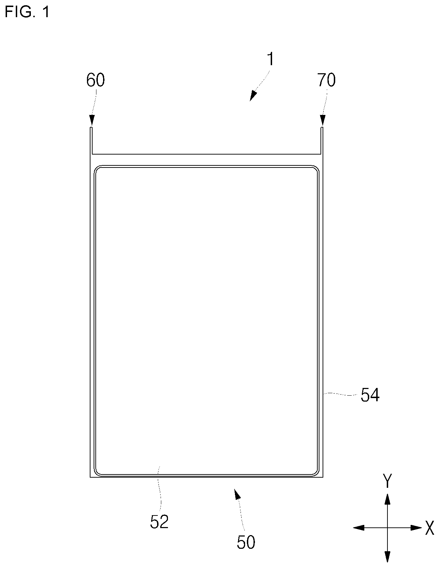

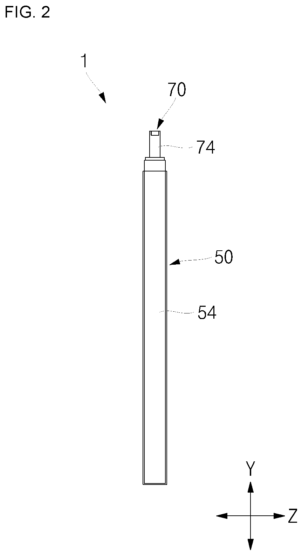

FIG. 1 is a plan view showing aspects of a secondary battery 1 according to some embodiments of the present disclosure, and FIG. 2 is a side view showing the secondary battery 1 according to some embodiments of the present disclosure. As shown in FIGs. 1 and 2, the secondary battery 1 according to some embodiments of the present disclosure may include an electrode assembly 10, a pouch unit 50, a first electrode terminal 60, and a second electrode terminal 70. The secondary battery 1 according to some embodiments of the present disclosure may further include a sealing portion 80 and a gas bag 90. The first electrode terminal 60 may be mounted on one side of the pouch unit 50 in a width direction (left side in FIG. 1), and the second electrode terminal 70 may be mounted on the other side of the pouch unit 50 in the width direction (right side in FIG. 1). The first electrode terminal 60 and the second electrode terminal 70 may be rectangular terminals and may be mounted in contact with the side surface of the pouch unit 50 while being maintained in an upright state.

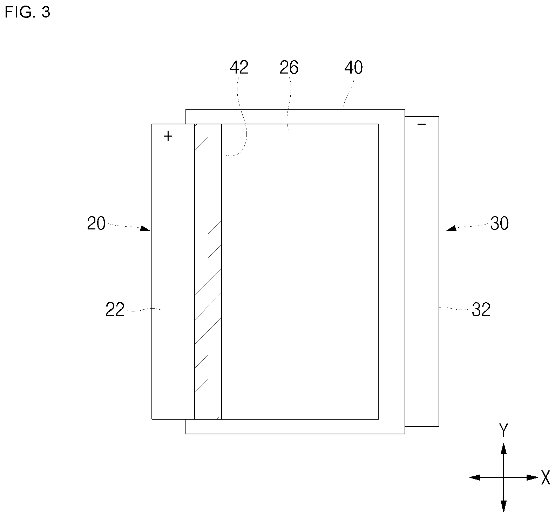

FIG. 3 is a plan view showing aspects of an electrode assembly 10 according to some embodiments of the present disclosure. As shown in FIG. 3, the electrode assembly 10 may be formed such that a first electrode plate 20, a second electrode plate 30, and a separator 40 are stacked in a stack shape.

In some pouch-type secondary batteries, a stack-type electrode assembly 10 may be used, and the attachment positions of a positive electrode tab and a negative electrode tab connected to the electrode assembly 10 may be located on the upper end or upper/lower ends of the electrode assembly 10, which causes current to move a relatively long distance.

In the secondary battery 1 according to some embodiments of the present disclosure, the first electrode terminal 60 and the second electrode terminal 70 may be mounted on both sides of the electrode assembly 10 in the width direction in order to provide a high-output battery and minimize or relatively reduce a current movement distance. According to some embodiments, an electrode uncoated portion connected to the first electrode terminal 60 and the second electrode terminal 70 may be provided on one side of the electrode assembly 10 in the width direction. The electrode uncoated portion according to some embodiments of the present disclosure may include a first uncoated portion 22 provided at the first electrode plate 20 and a second uncoated portion 32 provided at the second electrode plate 30. The first electrode plate 20 and the second electrode plate 30 may be alternately stacked with a separator 40 interposed therebetween.

The first uncoated portion 22 and the second uncoated portion 32 may extend in the longitudinal direction of the electrode assembly 10 and may be mounted on one side and the other side of the electrode assembly 10 in the width direction, respectively. Because the first uncoated portion 22 and the second uncoated portion 32 are integrally mounted on both sides of the electrode assembly 10 in the width direction, the current movement distance may be shortened, and thus resistance may be relatively reduced, with a result that a high-output secondary battery 1 may be provided.

The first electrode plate 20 and the second electrode plate 30 may be formed in a plate shape. The first electrode plate 20 may be a positive electrode plate, and the second electrode plate 30 may be a negative electrode plate. The first uncoated portion 22 may extend from one side of the first electrode plate 20 in the width direction (left side in FIG. 3), and the second uncoated portion 32 may extend from the other side of the second electrode plate 30 in the width direction (right side in FIG. 3). The first uncoated portion 22 connected to the first electrode plate 20 may be located on one side of the electrode assembly 10 in the width direction, and the second uncoated portion 32 connected to the second electrode plate 30 may be located on the other side of the electrode assembly 10 in the width direction.

The first electrode plate 20 may include a first substrate and a first active material layer located on the first substrate. The first substrate may include the first uncoated portion 22 or a first tab on which the first active material layer is not located, and the first uncoated portion 22 or the first tab may extend outward. The first uncoated portion 22 may be electrically connected to the first electrode plate 20, which is a positive electrode current collector. In the present disclosure, the first uncoated portion 22 may be referred to as a first tab or a positive electrode substrate tab. The length of the first uncoated portion 22 in a longitudinal direction may be equal to or less than the length of the first electrode plate 20 in a longitudinal direction.

The second electrode plate 30 may include a second substrate and a second active material layer located on the second substrate. The second substrate may include the second uncoated portion 32 or a second tab on which the second active material layer is not located, and the second uncoated portion 32 or the second tab may extend outward. The second uncoated portion 32 may be electrically connected to a negative electrode current collector. According to some embodiments, the first tab and the second tab may extend in different width directions. In the present disclosure, the second uncoated portion 32 may be referred to as a second tab or a negative electrode substrate tab. The length of the second uncoated portion 32 in a longitudinal direction may be equal to or less than the length of the second electrode plate 30 in a longitudinal direction. According to some embodiments, a negative electrode mixture portion may have a larger area than a positive electrode mixture portion.

The first electrode plate 20 may function as a positive electrode. In this case, the first substrate may be formed of, for example, aluminum foil, and the first active material layer may include, for example, a transition metal oxide. The second electrode plate 30 may function as a negative electrode. In this case, the second substrate may be formed of, for example, copper foil or nickel foil, and the second active material layer may include, for example, graphite and/or silicon.

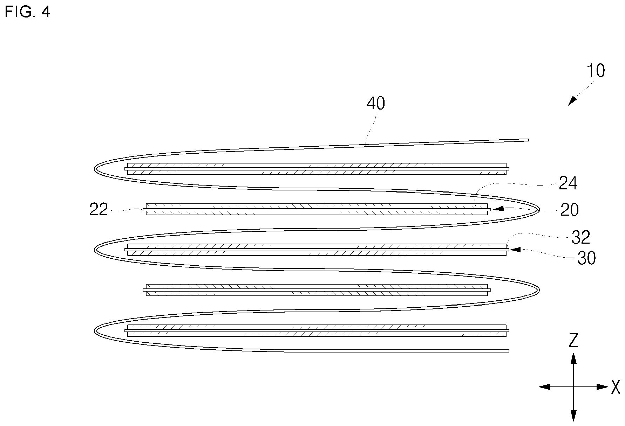

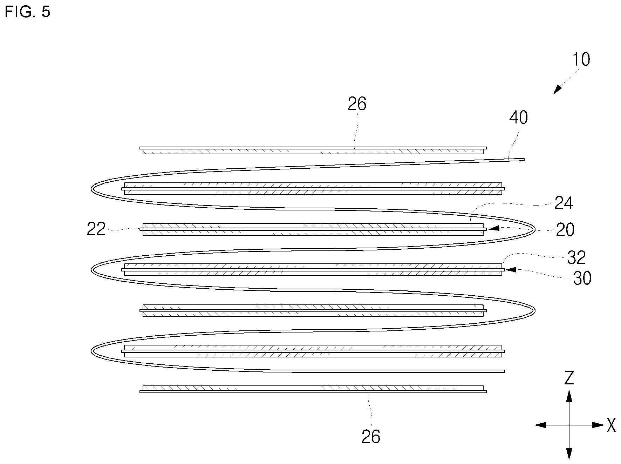

FIG. 4 is a front view of the electrode assembly 10 according to some embodiments of the present disclosure, and FIG. 5 is a front view showing a state in which an outer electrode plate 26 is mounted on the electrode assembly 10 according to some embodiments of the present disclosure. As shown in FIGs. 4 and 5, the separator 40 may be bent in a zigzag direction, and the first electrode plate 20 and the second electrode plate 30 may be alternately stacked with the separator 40 interposed therebetween. The separator 40 may be bent in a Z shape and may include a plurality of bent areas in contact with an end portion of the other side of the first electrode plate 20 in the width direction (right side in FIG. 4) and an end portion of one side of the second electrode plate 30 in the width direction (left side in FIG. 4). The separator 40 may be formed so as to cover the positive electrode mixture portion and the negative electrode mixture portion.

The separator 40 may prevent or relatively reduce instances of a short circuit between the first electrode plate 20 and the second electrode plate 30 while allowing lithium ions to move therebetween. According to some embodiments, the separator 40 may be located on two opposite side surfaces of the first electrode plate 20 or may be located on two opposite side surfaces of the second electrode plate 30.

The first electrode plate 20 may include an inner electrode plate 24 located inside the separator 40 and an outer electrode plate 26 located outside the separator 40. The inner electrode plate 24 may be a full cathode and may be formed by coating an electrode mixture on both surfaces of a positive electrode substrate. The second electrode plate 30 may be a full anode and may be formed by coating an electrode mixture on both surfaces of a negative electrode substrate. After the primary stack, the outer electrode plate 26 may be mounted on each of the upper side and the lower side of the primarily stacked electrode assembly 10. The outer electrode plate 26 may be a half cathode and may be formed by coating an electrode mixture on one surface of a positive electrode substrate. Because the outer electrode plate 26 is additionally mounted, the energy capacity of the secondary battery 1 may be increased.

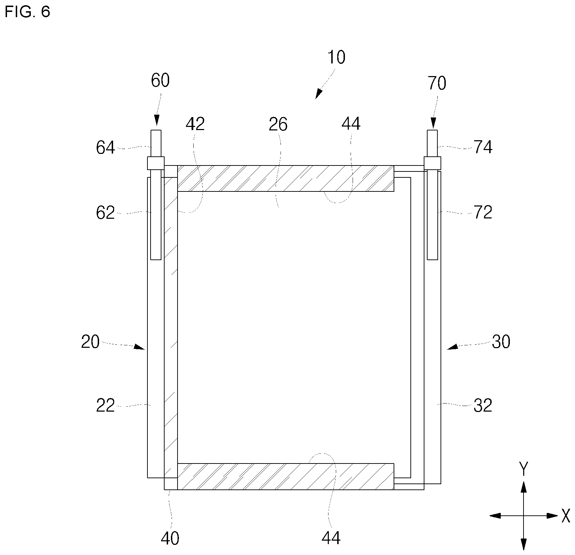

FIG. 6 is a plan view showing a state in which the first electrode terminal 60 and the second electrode terminal 70 are mounted to the electrode assembly 10 according to some embodiments of the present disclosure. As shown in FIG. 6, binding members 44 may be mounted on the upper side and the lower side of the electrode assembly 10. The binding members 44 may be implemented as a tape including an insulative material. The binding members 44 may be mounted on one side of the electrode assembly 10 in the longitudinal direction (upper side in FIG. 6) and the other side of the electrode assembly 10 in the longitudinal direction (lower side in FIG. 6) to maintain the shape of the electrode assembly 10. The binding members 44 may provide binding force so that the outer electrode plate 26 stably abuts the separator 40. The binding members 44 may be mounted while surrounding the outer electrode plate 26 located on the upper side of the electrode assembly 10 and the outer electrode plate 26 located on the lower side of the electrode assembly 10.

In the first electrode plate 20, which is a positive electrode, an insulating coating 42 may be provided on a part of the first uncoated portion 22. The insulating coating 42 may be provided on a part of the first uncoated portion 22 in the longitudinal direction, except for the part of the first uncoated portion 22 connected to the first electrode terminal 60. An insulating film formed by the insulating coating 42 may be a coating made of an insulative material. The insulating coating 42 may prevent or relatively reduce instances of a short circuit between the first uncoated portion 22 and the second electrode plate 30 coated with the negative electrode mixture portion.

The first electrode terminal 60 may be welded and electrically connected to the first uncoated portion 22, which is a positive electrode uncoated portion. Welding between the first uncoated portion 22 and the first electrode terminal 60 may be performed through ultrasonic or laser welding. The second electrode terminal 70 may be welded and electrically connected to the second uncoated portion 32, which is a negative electrode uncoated portion. Welding between the second uncoated portion 32 and the second electrode terminal 70 may be performed through ultrasonic or laser welding.

The first electrode terminal 60 may be variously modified in shape, so long as the first electrode terminal 60 is electrically connected to the first uncoated portion 22 and is located on one side of the pouch unit 50 in the width direction. The first electrode terminal 60 according to some embodiments of the present disclosure may include a first electrode body 62, which extends along the first uncoated portion 22 in the longitudinal direction of the electrode assembly 10, is electrically connected to the first uncoated portion 22, and is located on one side of the electrode assembly 10 in the width direction, and a first extension member 64, which extends from the first electrode body 62 to the outside of the pouch unit 50. The first electrode body 62 may be welded to the first uncoated portion 22 and may be located in the pouch unit 50.

The second electrode terminal 70 may be variously modified in shape, so long as the second electrode terminal 70 is electrically connected to the second uncoated portion 32 and is located on the other side of the pouch unit 50 in the width direction. The second electrode terminal 70 according to some embodiments of the present disclosure may include a second electrode body 72, which extends along the second uncoated portion 32 in the longitudinal direction of the electrode assembly 10, is electrically connected to the second uncoated portion 32, and is located on the other side of the electrode assembly 10 in the width direction, and a second extension member 74, which extends from the second electrode body 72 to the outside of the pouch unit 50. The second electrode body 72 may be welded to the second uncoated portion 32 and may be located in the pouch unit 50. The first electrode terminal 60 and the second electrode terminal 70 may extend in the longitudinal direction of the electrode assembly 10 and may be mounted parallel to each other.

Because the first electrode terminal 60 and the second electrode terminal 70, which extend in the longitudinal direction of the electrode assembly 10, are electrically connected to the first uncoated portion 22 and the second uncoated portion 32, a path along which current moves may be shortened, and thus resistance may be relatively reduced compared to the related art, with a result that a high-output secondary battery 1 may be manufactured.

If the length of the first electrode terminal 60 in the longitudinal direction is equal to or less than the length of the first uncoated portion 22 in the longitudinal direction, a contact area between the first uncoated portion 22 and the first electrode terminal 60 may increase, and thus electrical resistance may be relatively reduced. If the length of the second electrode terminal 70 in the longitudinal direction is equal to or less than the length of the second uncoated portion 32 in the longitudinal direction, a contact area between the second uncoated portion 32 and the second electrode terminal 70 may increase, and thus electrical resistance may be relatively reduced. The first electrode terminal 60 may be welded and electrically connected to the first uncoated portion 22, and the second electrode terminal 70 may be welded and electrically connected to the second uncoated portion 32.

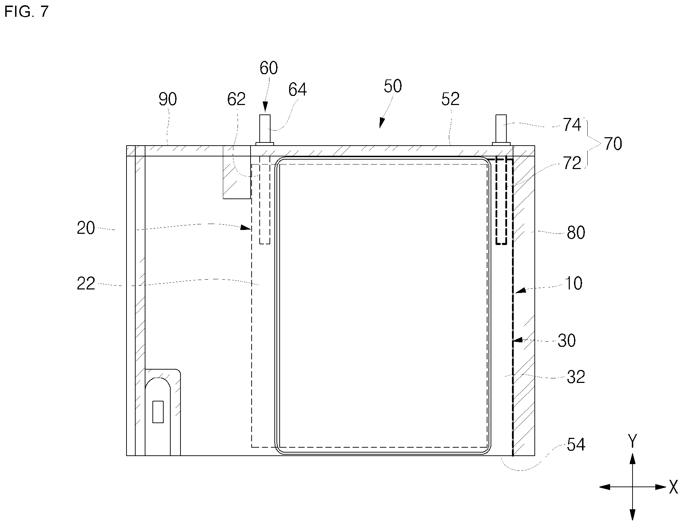

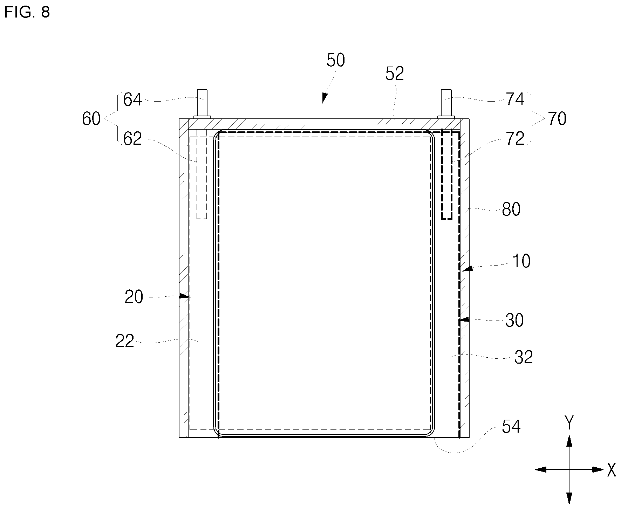

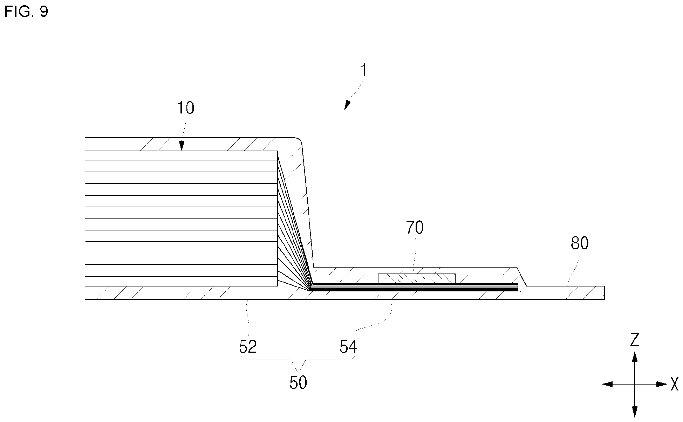

FIG. 7 is a plan view showing a state in which the electrode assembly 10 according to some embodiments of the present disclosure is mounted in the pouch unit 50, FIG. 8 is a plan view showing a state in which the pouch unit 50 according to some embodiments of the present disclosure is separated from the gas bag 90, and FIG. 9 is a front cross-sectional view of the secondary battery 1 according to some embodiments of the present disclosure.

As shown in FIG. 7, the electrode assembly 10 to which the first electrode terminal 60 and the second electrode terminal 70 are connected may be mounted in the pouch unit 50. The pouch unit 50 may include a gas bag 90, which will be used to remove gas. A formation process may be performed after the electrode assembly 10 and an electrolyte are introduced into the pouch unit 50 and then an edge of the pouch unit 50 is sealed. The formation process is referred to as a charging/discharging process or an activation process, and is a finishing process that activates the assembled battery so that the battery has electrical characteristics and that determines whether the assembled battery is defective.

After the electrode assembly 10 to which the first electrode terminal 60 and the second electrode terminal 70 are connected is accommodated in the pouch unit 50, an outer periphery of the electrode assembly 10 may be sealed to form a sealing portion 80. Subsequently, the gas bag 90 may be mounted on the pouch unit 50. According to some embodiments, the gas bag 90 and the pouch unit 50 may have the same length in the longitudinal direction.

As shown in FIG. 8, after a post-process is performed, a process of separating the gas bag 90 from the pouch unit 50 may be performed. A gas generated during the formation process may be removed through the gas bag 90. After the pouch unit 50 is cut so as to fit the outer dimension of the product, the cut portion of the pouch unit 50 may be sealed.

The pouch unit 50, in which the electrode assembly 10 is accommodated, may include a pouch body 52, which surrounds the outer side of the electrode assembly 10, and a pouch wing 54, which is connected to each of both sides of the pouch body 52 in the width direction and surrounds each of the first electrode terminal 60 and the second electrode terminal 70. The pouch wing 54 may be located on each of both sides of the pouch body 52 in the width direction.

As shown in FIGs. 8 and 9, the second electrode terminal 70 may be electrically connected to the second uncoated portion 32. The second electrode terminal 70 may be located inside the pouch wing, and an end portion of the pouch wing may be thermally fused to form the sealing portion 80.

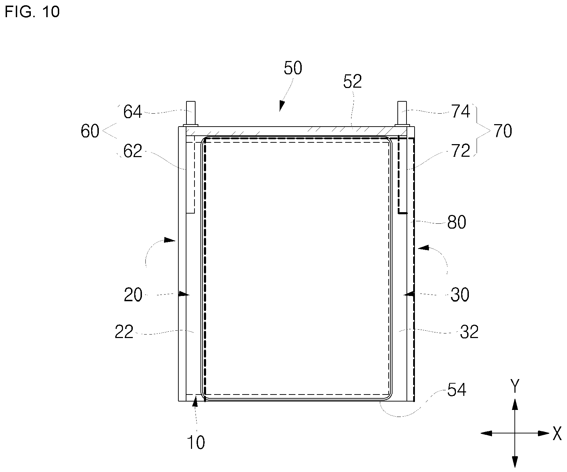

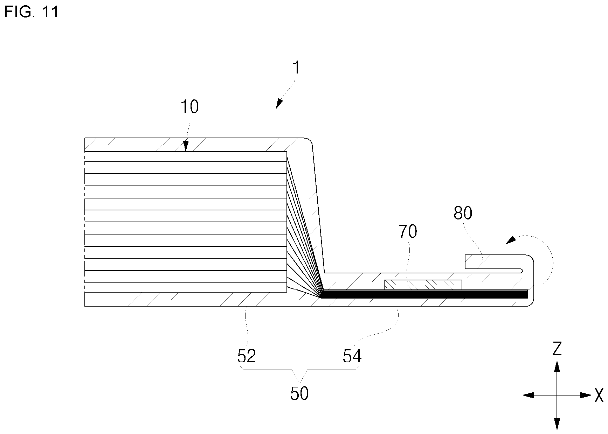

FIG. 10 is a plan view showing a state in which the sealing portion 80 of the secondary battery 1 according to some embodiments of the present disclosure is folded above the pouch wing 54, and FIG. 11 is a front cross-sectional view showing a state in which the sealing portion 80 of the secondary battery 1 according to some embodiments of the present disclosure is folded above the pouch wing 54. As shown in FIGs. 10 and 11, the sealing portion 80 located on the other side of the pouch unit 50 in the width direction may be folded toward the second electrode terminal 70. As shown in FIG. 11, the sealing portion 80 formed on the side surface of the pouch unit 50 may be folded outwardly of the pouch wing 54, which will be referred to as primary folding.

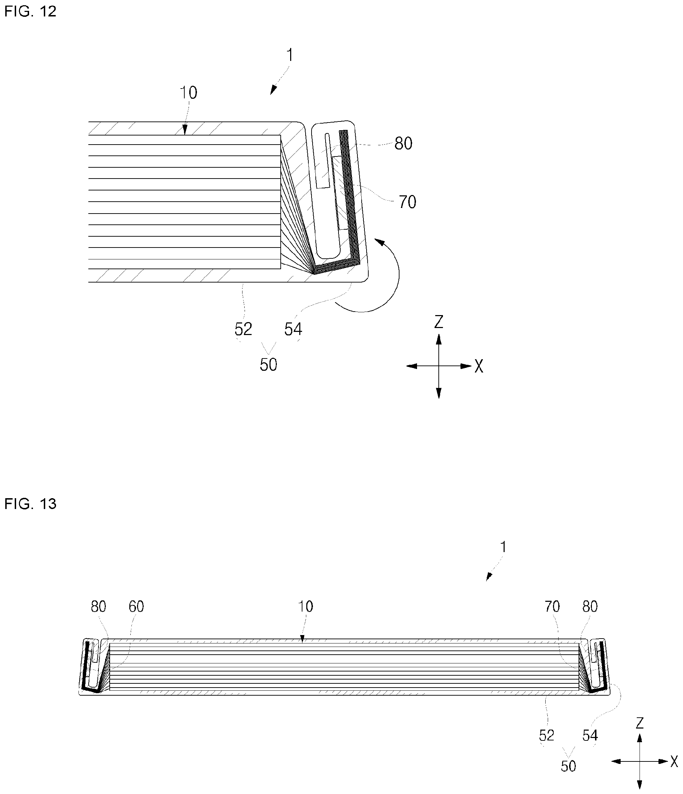

FIG. 12 is a front cross-sectional view showing a state in which the second electrode terminal 70 according to some embodiments of the present disclosure is folded toward the pouch body 52 together with the sealing portion 80. As shown in FIG. 12, the second uncoated portion 32 and the second electrode terminal 70 may be folded toward the pouch body 52 together with the pouch wing 54, which will be referred to as secondary folding. After the pouch unit 50 is sealed, folding operation may be performed such that the second uncoated portion 32 is folded together with the second electrode terminal 70. The sealing portion 80 and the second electrode terminal 70 may be folded together toward the pouch unit 50. Because the second uncoated portion 32, the second electrode terminal 70, and the sealing portion 80 are folded toward the side surface of the pouch unit 50, it may be possible to prevent, reduce, or minimize damage to the electrode assembly 10 due to external impact and thus to relatively improve the safety of the secondary battery 1.

FIG. 13 is a front cross-sectional view of the secondary battery 1 according to some embodiments of the present disclosure. As shown in FIGs. 12 and 13, the primary folding and the secondary folding may also be performed on the first uncoated portion 22, the sealing portion 80, and the first electrode terminal 60 in the above-described way. The sealing portion 80 located on one side of the pouch unit 50 in the width direction may be folded toward the first electrode terminal 60, and then the sealing portion 80 and the first electrode terminal 60 may be folded together toward the pouch unit 50.

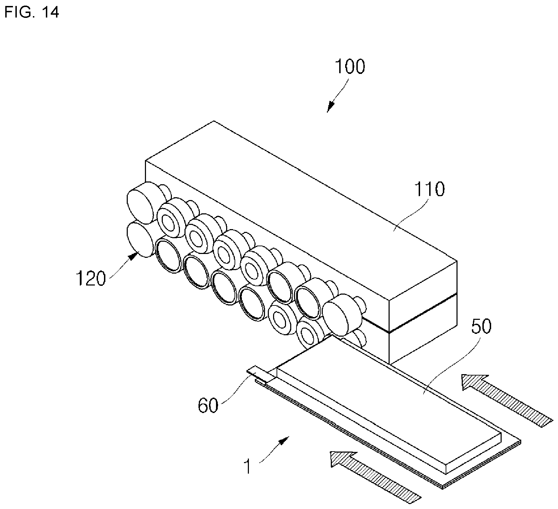

FIG. 14 is a perspective view showing a state in which both sides of the secondary battery 1 according to some embodiments of the present disclosure pass through a roller processing device 100. As shown in FIG. 14, the pouch unit 50 to which the first electrode terminal 60 and the second electrode terminal 70 are connected may be automatically folded while passing through the roller processing device 100.

The roller processing device 100 may include a stationary support body 110 and a plurality of forming rollers 120 rotatably mounted on the support body 110. The forming rollers 120 may be variously modified in shape, so long as the forming rollers 120 fold the first electrode terminal 60, the second electrode terminal 70, and the pouch wing.

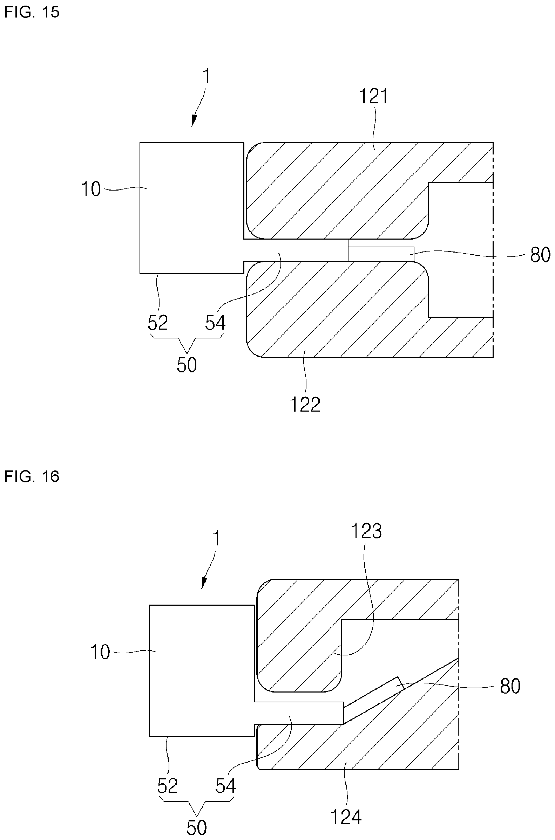

FIG. 15 is a front view showing a state in which the pouch wing 54 and the sealing portion 80 according to some embodiments of the present disclosure are located between a first upper roller 121 and a first lower roller 122. As shown in FIG. 15, the pouch wing 54 and the sealing portion 80 may pass between the first upper roller 121 and the first lower roller 122. The pouch wing 54 may extend from the pouch body 52 in the horizontal direction, and the sealing portion 80 may extend from the end portion of the pouch wing 54 in the horizontal direction.

FIG. 16 is a front view showing a state in which the sealing portion 80 according to some embodiments of the present disclosure is bent by a second lower roller 124. As shown in FIG. 16, the pouch wing 54 and the sealing portion 80 may pass between a second upper roller 123 and a second lower roller 124. The sealing portion 80 may be bent upwardly from the end portion of the pouch wing 54 by the second lower roller 124.

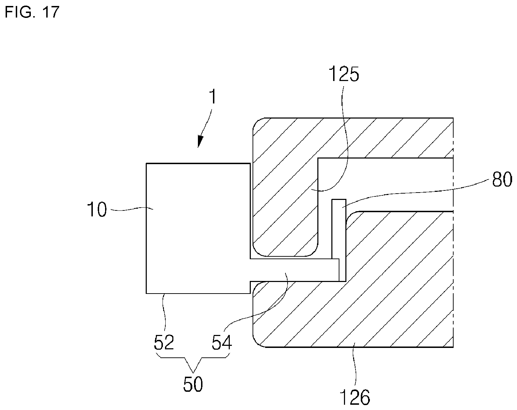

FIG. 17 is a front view showing a state in which the sealing portion 80 and the pouch wing 54 according to some embodiments of the present disclosure form a right angle therebetween. As shown in FIG. 17, the pouch wing 54 and the sealing portion 80 may pass between a third upper roller 125 and a third lower roller 126. The sealing portion 80 may be bent so as to form a right angle with the end portion of the pouch wing 54 by the third upper roller 125 and the third lower roller 126.

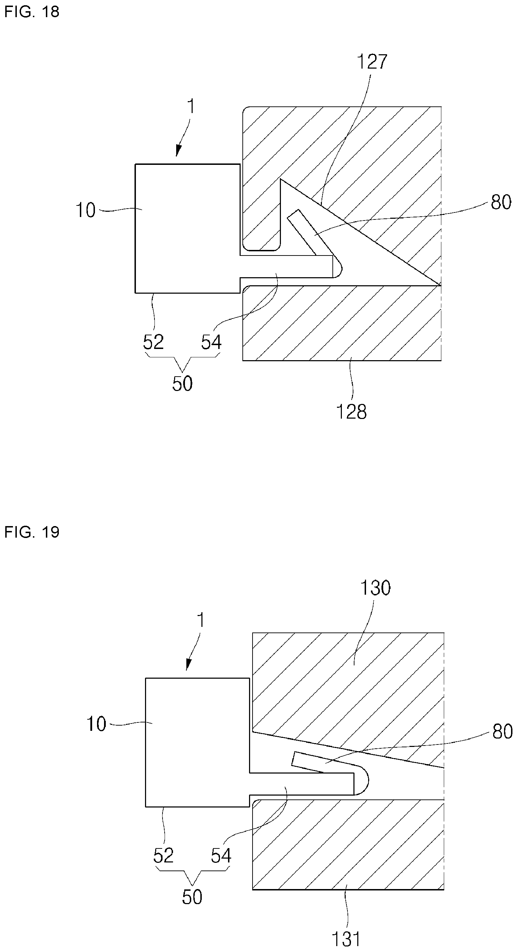

FIG. 18 is a front view showing a state in which the sealing portion 80 and the pouch wing 54 according to some embodiments of the present disclosure form an acute angle therebetween. As shown in FIG. 18, the pouch wing 54 and the sealing portion 80 may pass between a fourth upper roller 127 and a fourth lower roller 128. The sealing portion 80 may be bent so as to form an acute angle with the pouch wing 54 by the fourth upper roller 127 and the fourth lower roller 128.

FIG. 19 is a front view showing a state in which the sealing portion 80 and the pouch wing 54 according to some embodiments of the present disclosure face each other. As shown in FIG. 19, the pouch wing 54 and the sealing portion 80 may pass between a fifth upper roller 130 and a fifth lower roller 131. The sealing portion 80 may be bent so as to abut the upper side of the pouch wing 54 by the fifth upper roller 130 and the fifth lower roller 131.

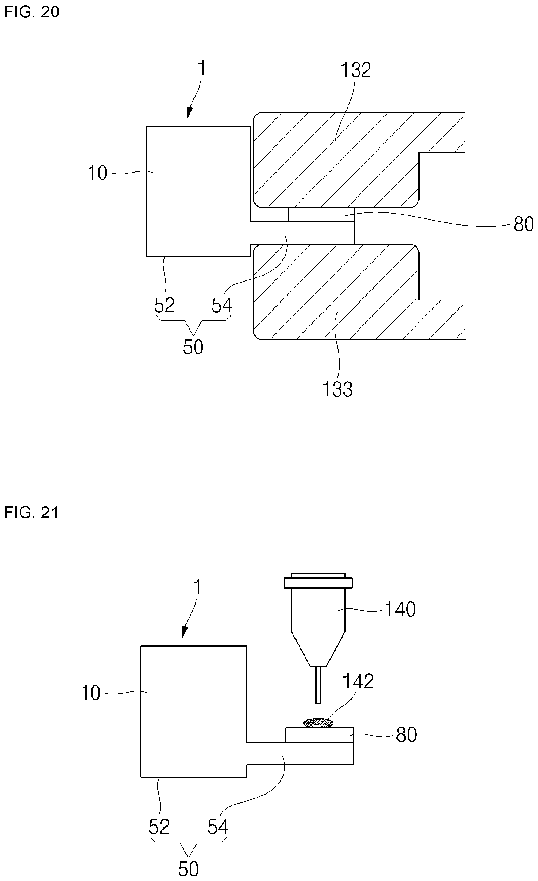

FIG. 20 is a front view showing a state in which the sealing portion 80 and the upper side of the pouch wing 54 according to some embodiments of the present disclosure overlap each other. As shown in FIG. 20, the pouch wing 54 and the sealing portion 80 may pass between a sixth upper roller 132 and a sixth lower roller 133. The sealing portion 80 may be fixed in a state of abutting the upper side of the pouch wing 54 by the sixth upper roller 132 and the sixth lower roller 133.

FIG. 21 is a front view showing a state in which an adhesive 142 is applied to the sealing portion 80 according to some embodiments of the present disclosure. As shown in FIG. 21, in a state in which the adhesive 142 is applied to the outer side of the pouch wing 54, the pouch wing 54 may be folded toward the pouch body 52 and fixed to the pouch body 52. In other embodiments, in a state in which the adhesive 142 is applied to the outer side of the sealing portion 80 folded above the pouch wing 54, the pouch wing 54 may be folded toward the pouch body 52 together with the sealing portion 80. The first uncoated portion 22 or the second uncoated portion 32 may be located inside the pouch wing 54. If the first uncoated portion 22 is located inside the pouch wing 54, the first electrode terminal 60 connected to the first uncoated portion 22 may also be located inside the pouch wing 54. The adhesive 142 supplied from an adhesive supply device 140 may be applied to the sealing portion 80 or the pouch wing 54, and the pouch wing 54 may be maintained in a folded state by operation of applying heat and pressure thereto.

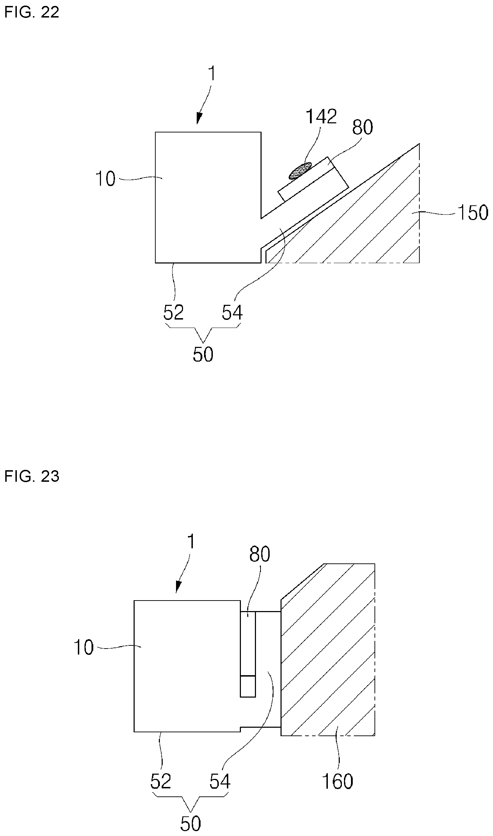

FIG. 22 is a front view showing a state in which the sealing portion 80 and the pouch wing 54 according to some embodiments of the present disclosure are bent toward the pouch body 52. As shown in FIG. 22, the sealing portion 80 to which the adhesive 142 is applied and the pouch wing 54 may move along a first guide jig 150 having an inclined surface, thereby forming an acute angle with the side surface of the pouch body 52.

FIG. 23 is a front view showing a state in which the sealing portion 80 according to some embodiments of the present disclosure is fixed to the side surface of the pouch body 52. As shown in FIG. 23, the sealing portion 80 to which the adhesive 142 is applied and the pouch wing 54 may move along a second guide jig 160 having a vertical surface, thereby abutting the side surface of the pouch body 52, and may be maintained in a state of being fixed to the side surface of the pouch body 52 by the adhesive 142.

A method in which the sealing portion 80 and the pouch wing 54 are folded to the pouch body 52 is not limited to the above-described method. The sealing portion 80 and the pouch wing 54 may also be folded to the pouch body 52 using various manufacturing methods other than above-described method.

The electrode assembly 10 of the present disclosure will now be described in more detail.

As the positive electrode active material, a compound capable of reversibly intercalating /deintercalating lithium (e.g., a lithiated intercalation compound) may be used. For example, at least one of a composite oxide of lithium or a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to some embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer located on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The battery according to the above-described embodiments may be used to manufacture a battery pack.

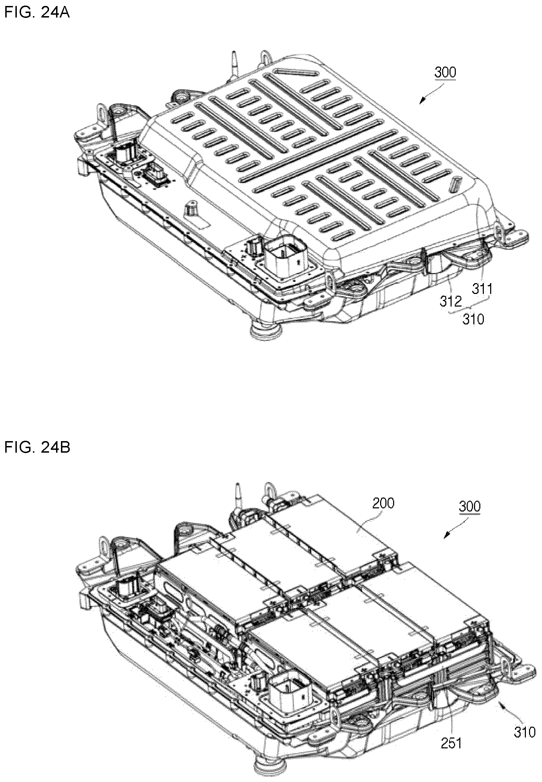

FIGs. 24A and 24B are perspective views showing a battery pack including the secondary battery according to some embodiments of the present disclosure.

Referring to FIGs. 24A and 24B, the battery pack 300 may include a plurality of battery modules 200 and a housing 310 to accommodate the plurality of battery modules 200. For example, the housing 310 may comprise a first and a second housing 311, 312 that are coupled in facing directions with the plurality of battery modules 200 interposed between them. The plurality of battery modules 210 can be electrically connected to each other using a bus bar 251, and the plurality of battery modules 200 can be electrically connected in series/parallel or a mixed series-parallel manner to obtain the required electrical output. In the drawings, for the sake of convenience, components such as bus bars, cooling units, and external terminals for the electrical connection of battery cells are omitted. In some embodiments, the battery pack 300 can be mounted on a vehicle. The vehicle may be, for example, an electric vehicle, a hybrid vehicle, or a plug-in hybrid vehicle. The vehicle can include both four-wheel and two-wheel vehicles.

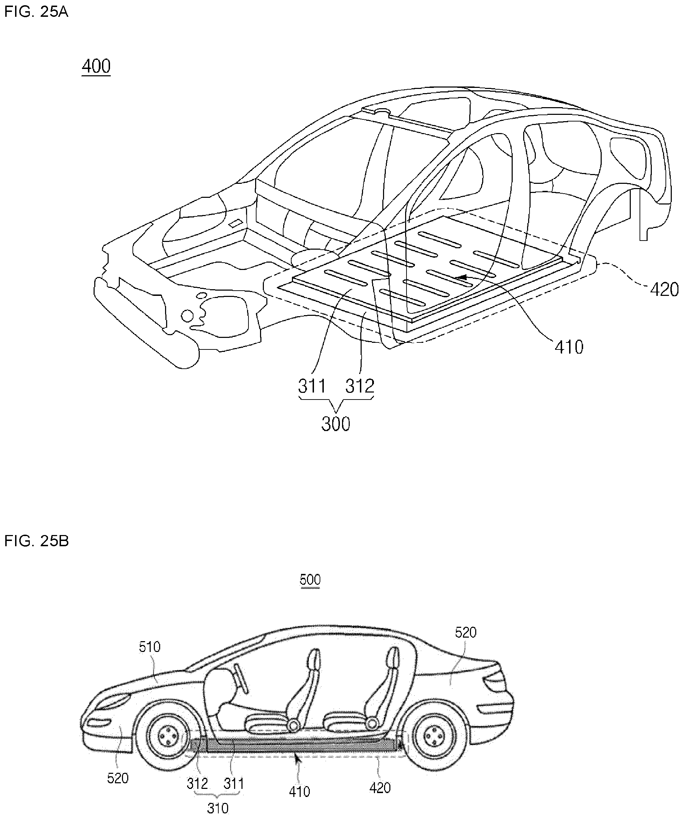

FIGs. 25A and 25B are, respectively, a perspective view and a side view showing a vehicle body 400 and a vehicle 500 including the battery pack 300 according to some embodiments of the present disclosure.

In FIG. 25A, the battery pack 300 may include a battery pack cover 311, which is part of the vehicle underbody 410 and may correspond to the first housing, and a pack frame 312, which is placed beneath the vehicle underbody 410 and may correspond to the second housing. The battery pack cover 311 and pack frame 312 may be structurally integrated with the vehicle floor 420. The vehicle underbody 410 separates the interior and exterior of the vehicle, and the pack frame 312 may be positioned outside the vehicle.

As shown in FIG. 25B, the vehicle 500 can be assembled with additional components such as a hood 510 at the front of the vehicle body 400 and fenders 520 located at the front and rear of the vehicle. The vehicle 500 includes the battery pack 300 comprising the battery pack cover 311 and the pack frame 312, and the battery pack 300 can be coupled to the vehicle body part 400.

As is apparent from the above description, according to some embodiments of the present disclosure, there may be provided a high-output secondary battery in which integrated electrode uncoated portions are respectively located on both sides of an electrode assembly in a width direction, thereby shortening a path along which current moves and thus relatively reducing electrical resistance.

However, the technical effects to be achieved in the embodiments of the disclosure are not limited to the technical problems mentioned above, and those skilled in the art to which the disclosure belongs will clearly understand other technical effects not mentioned herein from the above description.

## Claims

1. A secondary battery (1) comprising:
an electrode assembly (10) comprising a first electrode plate (20), a second electrode plate (30), and a separator (40), the electrode assembly (10) being formed such that a first uncoated portion (22) connected to the first electrode plate (20) is located on one side of the electrode assembly (10) in a width direction and a second uncoated portion (32) connected to the second electrode plate (30) is on an opposite side of the electrode assembly (10) in the width direction;
a pouch unit (50) accommodating the electrode assembly (10);
a first electrode terminal (60) electrically connected to the first uncoated portion (22) and located on one side of the pouch unit (50) in the width direction; and
a second electrode terminal (70) electrically connected to the second uncoated portion (32) and located on an opposite side of the pouch unit (50) in the width direction.

2. The secondary battery (1) as claimed in claim 1, wherein the electrode assembly (10) is formed such that the separator (40) is bent in a zigzag configuration and the first electrode plate (20) and the second electrode plate (30) are alternately stacked with the separator (40) interposed therebetween.

3. The secondary battery (1) as claimed in claim 1 or 2, wherein a length of the first uncoated portion (22) in a longitudinal direction is equal to or less than a length of the first electrode plate (20) in the longitudinal direction.

4. The secondary battery (1) as claimed in any one of the preceding claims, wherein the first electrode terminal (60) comprises:
a first electrode body (62) extending along the first uncoated portion (22) in the longitudinal direction of the electrode assembly (10), electrically connected to the first uncoated portion (22), and located on one side of the electrode assembly (10) in the width direction; and
a first extension member (64) extending from the first electrode body (62) to an outside of the pouch unit (50).

5. The secondary battery (1) as claimed in any one of the preceding claims, wherein a length of the second uncoated portion (32) in a longitudinal direction is equal to or less than a length of the second electrode plate (30) in the longitudinal direction.

6. The secondary battery (1) as claimed in any one of the preceding claims, wherein the second electrode terminal (70) comprises:
a second electrode body (72) extending along the second uncoated portion (32) in the longitudinal direction of the electrode assembly (10), electrically connected to the second uncoated portion (32), and located on an opposite side of the electrode assembly (10) in the width direction; and
a second extension member (74) extending from the second electrode body (72) to an outside of the pouch unit (50).

7. The secondary battery (1) as claimed in any one of the preceding claims, further comprising a sealing portion (80) configured to seal an outer periphery of the electrode assembly (10) after the electrode assembly (10) to which the first electrode terminal (60) and the second electrode terminal (70) are connected is accommodated in the pouch unit (50).

8. The secondary battery (1) as claimed in claim 7, wherein, in a folded state in which the sealing portion (80) located on one side of the pouch unit (50) in the width direction is folded toward the first electrode terminal (60), the sealing portion (80) and the first electrode terminal (60) are folded together toward the pouch unit (50).

9. The secondary battery (1) as claimed in claim 7 or 8, wherein, in a folded state the sealing portion (80) located on an opposite side of the pouch unit (50) in the width direction is folded toward the second electrode terminal (70), the sealing portion (80) and the second electrode terminal (70) are folded together toward the pouch unit (50).

10. A secondary battery (1) as claimed in claim 1, wherein the first electrode plate (20) and the second electrode plate (30) are alternately stacked with the separator (40) interposed therebetween, and the first electrode terminal (60) and the second electrode terminal (70) are extending in a longitudinal direction of the electrode assembly (10) and mounted parallel to each other.

11. The secondary battery (1) as claimed in claim 10, wherein the separator (40) is bent in a Z shape and comprises a plurality of bent areas in contact with an end portion of an opposite side of the first electrode plate (20) in the width direction and an end portion of one side of the second electrode plate (30) in the width direction.

12. The secondary battery (1) as claimed in claim 10 or 11, further comprising a sealing portion (80) configured to seal an outer periphery of the electrode assembly (10) after the electrode assembly (10) to which the first electrode terminal (60) and the second electrode terminal (70) are connected is accommodated in the pouch unit (50).

13. The secondary battery (1) as claimed in claim 12, wherein, in a folded state in which the sealing portion (80) located on one side of the pouch unit (50) in the width direction is folded toward the first electrode terminal (60), the sealing portion (80) and the first electrode terminal (60) are folded together toward the pouch unit (50).

14. The secondary battery (1) as claimed in claim 12 or 13, wherein, in a folded state in which sealing portion (80) located on an opposite side of the pouch unit (50) in the width direction is folded toward the second electrode terminal (70), the sealing portion (80) and the second electrode terminal (70) are folded together toward the pouch unit (50).

15. The secondary battery (1) as claimed in any one of claims 10 to 14**,** wherein the pouch unit (50) comprises:
a pouch body (52) surrounding an outer side of the electrode assembly (10); and
a pouch wing (54) connected to each of both sides of the pouch body (52) in the width direction and surrounding each of the first electrode terminal (60) and the second electrode terminal (70), and
wherein the pouch wing (54) is folded toward the pouch body (52) with an adhesive (142) applied to an outer side of the pouch wing (54) and is fixed to the pouch body (52).
